# FASCICULE DE BREVET EUROPEEN

(11) **EP 3 202 015 B1**
(45) Date de publication et mention de la délivrance du brevet: **23.01.2019**
(21) Numéro de dépôt: 15791683.4
(22) Date de dépôt: 02.10.2015
(51) Int. Cl.: H02J 7/14, B60R 16/033

(54) **DISPOSITIF DE GESTION DE TRANSFERT D'ÉNERGIE AMÉLIORÉ**
VERBESSERTE VORRICHTUNG ZUR LEISTUNGSÜBERTRAGUNGSVERWALTUNG
IMPROVED POWER TRANSFER MANAGEMENT DEVICE

(30) Priorité: 03.10.2014 FR 1459489
(43) Date de publication de la demande: 09.08.2017
(73) Titulaire: PSA Automobiles SA, 78300 Poissy (FR)
(72) Inventeur: COMTE, Raphael, F-77380 Combs la Ville (FR); BOUCLY, Bernard, F-78150 Le Chesnay (FR)
(74) Mandataire: Jeannin, Laurent Jean-Pierre
(86) Numéro de dépôt international: PCT/FR2015/052643
(87) Numéro de publication internationale: WO 2016/051104

(56) Documents cités:
- WO-A2-2012/104264
- DE-A1-102011 012 958
- DE-A1-102011 054 582
- FR-A1- 3 001 931
- US-B1- 6 229 279

## Description

L'invention concerne la gestion de l'énergie électrique d'un véhicule dans un réseau très basse tension (ou TBT), aussi appelé réseau 12V.

On connait, par le document DE 10 2011 056 270, une architecture électrique d'un réseau de bord de véhicule. Cette architecture permet de faire cohabiter deux stockeurs sur le même réseau 12V : une batterie plomb et une batterie lithium. Cette architecture met en oeuvre un premier et un second interrupteurs de type MOSFET comportant chacun une diode. L'anode de la diode du premier interrupteur est reliée à l'anode de la diode du second interrupteur. Cette architecture présente les inconvénients suivants. Le courant de charge de la batterie lithium n'est pas maîtrisé. Du fait que des consommateurs sont en parallèles de la batterie lithium, cette architecture ne permet pas de limiter le courant vers l'ensemble batterie lithium, consommateurs réseau de bord. La non maitrise du courant de recharge de la batterie lithium peut provoquer des saturations de l'alternateur. Cela risque aussi de provoquer de fortes variations de tension (sous-tension) sur le réseau de bord. Il est aussi possible que la batterie plomb se décharge (phénomène de cyclage de la batterie). Pour faire face à des chutes de tension du réseau de bord, il est possible de pratiquer un délestage sur des équipements du réseau de bord. Mais cela peut être préjudiciable au confort des occupants du véhicule.

On connait aussi, par le document WO2012104264 un appareil de gestion de puissance électrique destiné à un véhicule motorisé comprenant : un dispositif de stockage de puissance primaire destiné à alimenter un dispositif de démarreur de moteur; une charge électrique de véhicule; un dispositif de stockage de puissance secondaire destiné à alimenter la charge électrique de véhicule; et une partie diode primaire à semi-conducteurs couplée entre le dispositif de stockage de puissance primaire et la charge électrique de véhicule, la partie diode primaire servant à permettre un écoulement de courant vers l'avant par elle-même depuis le dispositif de stockage de puissance primaire jusqu'à la charge électrique de véhicule lorsque le dispositif de démarreur n'est pas en cours d'utilisation et à empêcher un écoulement de courant dans le sens inverse par elle-même depuis le dispositif de stockage de puissance secondaire jusqu'au dispositif de démarreur de moteur lorsque le démarreur est en cours d'utilisation.

L'invention a donc pour but de remédier aux inconvénients précités en proposant un dispositif de gestion de l'énergie amélioré, permettant de faire cohabiter deux stockeurs d'énergie sur un réseau et améliorant la sureté de fonctionnement du réseau électrique et la stabilité de la tension du réseau de bord.

Elle propose plus précisément à cet effet un dispositif de gestion de transfert d'énergie comportant une première borne destinée à être reliée à une masse électrique, une deuxième borne destinée à être reliée à un premier stockeur d'énergie électrique, une troisième borne destinée à être reliée à au moins un consommateur électrique, une quatrième borne destinée à être reliée à un deuxième stockeur d'énergie électrique, caractérisé en ce qu'il comprend un premier interrupteur principal relié d'une part à la deuxième borne et d'autre part à la troisième borne, un deuxième interrupteur principal relié d'une part à la quatrième borne et d'autre part à la troisième borne, le premier interrupteur principal comportant une première diode dont la cathode est reliée à la troisième borne, le deuxième interrupteur principal comportant une deuxième diode dont la cathode est reliée à la troisième borne.

Le terme « relié » indique que deux éléments sont reliés électriquement soit directement par une liaison électrique, soit indirectement par l'intermédiaire d'un ou plusieurs composant(s) (par exemple une inductance, une mesure (ou shunt) de courant ou un interrupteur).

L'expression « l'élément 1 est positionné entre l'élément 2 et l'élément 3 » indique que l'élément est relié électriquement à l'élément 2 et à l'élément soit directement par une liaison électrique, soit indirectement par l'intermédiaire d'un ou plusieurs composant(s) (par exemple une inductance, une mesure (ou shunt) de courant ou un interrupteur).

L'utilisation d'interrupteurs à cathode commune (et non pas à anode commune comme dans le document DE 10 2011 056 270) ainsi que le positionnement du au moins un consommateur électrique (en particulier le réseau de bord) entre les interrupteurs de puissance (de type MOSFET par exemple) avec des diodes à cathode commune, permet d'obtenir une meilleure sureté de fonctionnement. En effet, en cas de défaillance en circuit ouvert du premier interrupteur et/ou du deuxième interrupteur, le réseau de bord continue d'être alimenté via les diodes. Les diodes à cathodes communes autorisent un transfert de puissance « naturel » (non commuté) de chaque stockeur vers le réseau de bord. L'absence de commutation permet une alimentation instantanée du réseau de bord en cas de défaillance, contrairement à un système utilisant un interrupteur de secours avec lequel il est nécessaire de détecter la défaillance avant de faire commuter l'interrupteur de secours.

Selon une caractéristique de l'invention, le premier interrupteur principal comprend en outre un premier interrupteur élémentaire positionné entre la deuxième borne et la troisième borne.

Selon une caractéristique de l'invention, le premier interrupteur principal comporte, en outre, un deuxième interrupteur élémentaire, monté en parallèle de la première diode.

Le deuxième interrupteur élémentaire permet de contrôler le passage du courant transitant depuis ou vers la deuxième borne.

Selon une autre caractéristique de l'invention, le deuxième interrupteur principal comporte, en outre, un troisième interrupteur élémentaire, monté en parallèle de la deuxième diode.

Le pilotage du troisième interrupteur élémentaire permet de contrôler le passage du courant transitant depuis ou vers la quatrième borne P3.

De façon avantageuse, le dispositif de gestion de transfert d'énergie selon l'invention, comprend, en outre, un superviseur apte à délivrer :
- un signal modulé au deuxième interrupteur élémentaire de façon à limiter le courant transitant par ledit deuxième interrupteur élémentaire, ledit deuxième interrupteur élémentaire étant adapté pour être piloté par un signal en modulation de largeur d'impulsions, et
- un signal modulé au troisième interrupteur élémentaire de façon à limiter le courant transitant par ledit troisième interrupteur élémentaire, ledit troisième interrupteur élémentaire étant adapté pour être piloté par un signal en modulation de largeur d'impulsions.

Le pilotage du deuxième interrupteur élémentaire permet une limitation de courant transitant depuis la quatrième borne P3 vers la première borne P1 (par exemple pour alimenter une machine électrique branchée sur P1) pour respecter les contraintes en tension du réseau de bord. Cette limitation est monodirectionnelle. En limitant le courant sortant par la deuxième borne P1, on peut garantir une tension minimale aux équipements reliés à la troisième borne P2.

Le pilotage du troisième interrupteur élémentaire permet une limitation de courant transitant depuis la première borne P1 vers la quatrième borne P3 (par exemple pour recharger le deuxième stockeur à partir de l'ensemble comprenant le premier stockeur et l'alternateur) tout en gardant une tension respectant les contraintes en tension du réseau de bord. Cette limitation est monodirectionnelle. Cette maîtrise du courant de recharge du stockeur garantit un niveau de tension conforme aux critères de qualité du réseau de bord.

De façon avantageuse, le dispositif de gestion de transfert d'énergie selon l'invention, comprend, en outre,
- une première diode de roue libre dont l'anode est reliée à la première borne et la cathode à l'anode de la deuxième diode,
- une deuxième diode de roue libre dont l'anode est reliée à la première borne et la cathode à l'anode de la première diode et
- une capacité reliée d'une part à la troisième borne et d'autre part à la première borne.

La capacité permet de filtrer la tension du réseau de bord : limiter les variations de tension induite par les pilotages en PWM des interrupteurs principaux. Sans cela, du fait des effets inductifs, la tension peut atteindre des niveaux très élevés. Les diodes de roues libres permettent aussi d'éviter des surtensions.

Avantageusement, le dispositif de gestion de transfert d'énergie selon l'invention, comprend, en outre, un interrupteur électromécanique positionné entre d'une part, la quatrième borne et d'autre part, un ensemble comprenant l'anode de la deuxième diode et la cathode de la première diode de roue libre. L'interrupteur électromécanique, en position ouverte, permet d'isoler le deuxième stockeur par exemple en cas d'atteinte aux limites du stockeur. Il est également ouvert lors de la veille du véhicule.

Avantageusement, le dispositif de gestion de transfert d'énergie selon l'invention, comprend, en outre :
- une première inductance positionnée entre, d'une part, la deuxième borne et, d'autre part, l'ensemble comprenant l'anode de la première diode et la cathode de la deuxième diode de roue libre, et
- une deuxième inductance positionnée entre d'une part, la quatrième borne et, d'autre part, l'ensemble comprenant l'anode de la deuxième diode et la cathode de la première diode de roue libre.

Ces deux inductances sont ajoutées pour compenser un effet inductif insuffisant des faisceaux. Ce phénomène peut se produire notamment si les faisceaux sont relativement courts (quelques centimètres).

L'invention concerne un système électrique d'un véhicule comportant un producteur d'énergie un premier stockeur d'énergie, un deuxième stockeur d'énergie et un réseau de bord principal comportant au moins un consommateur électrique caractérisé en ce qu'il comporte en outre un dispositif de gestion de transfert d'énergie selon l'invention, la deuxième borne étant reliée au premier stockeur, la troisième borne étant reliée au réseau de bord, la quatrième borne étant reliée au deuxième stockeur, la première borne étant relié à une masse électrique du véhicule, le producteur d'énergie étant relié à la deuxième borne ou à la troisième borne.

L'invention concerne aussi un véhicule comportant un dispositif de gestion de transfert d'énergie selon l'invention ou un système électrique selon l'invention.

D'autres caractéristiques et avantages de l'invention apparaîtront à l'examen de la description détaillée ci-après, et des dessins annexés, sur lesquels:
- la figure 1 illustre un système électrique selon l'invention ;
- la figure 2 illustre un premier mode de fonctionnement du système selon l'invention ;
- la figure 3 illustre un deuxième mode de fonctionnement du système selon l'invention ;
- la figure 4 représente deux diagrammes présentant l'évolution, au cours du temps, de différentes d'intensités mesurées dans le système selon l'invention.
- la figure 5 illustre un troisième mode de fonctionnement du système selon l'invention ;
- la figure 6 représente deux diagrammes présentant l'évolution, au cours du temps, de différentes d'intensités et tensions mesurées dans le système selon l'invention ;
- la figure 7 montre une variante de réalisation d'un système électrique selon l'invention.
- La figure 8 montre un mode de réalisation simplifié d'un système électrique selon l'invention.

Les dessins annexés pourront non seulement servir à compléter l'invention, mais aussi contribuer à sa définition, le cas échéant.

Dans ce qui suit, on considère à titre d'exemple non limitatif que le système électrique présenté est embarqué à bord d'un véhicule comportant un moteur thermique comportant un réseau de bord comprenant des consommateurs.

Mais l'invention n'est pas limitée à ce mode de réalisation. En effet, elle concerne tout système électrique et électronique comportant au moins deux stockeurs d'énergie et un consommateur.

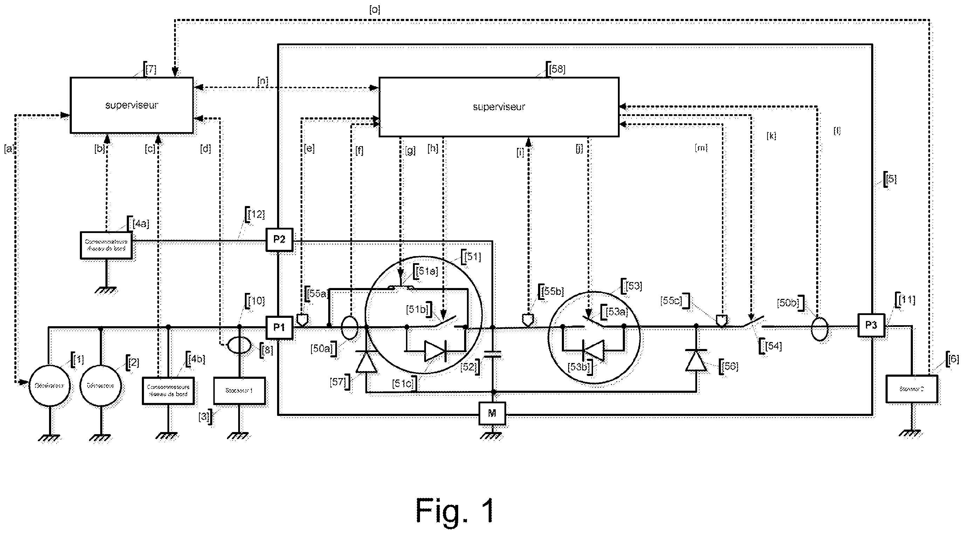

En référence à la figure 1, le système électrique selon l'invention comporte les éléments suivants : un producteur d'énergie électrique 1 (par exemple, un alternateur), un démarreur 2, un premier stockeur d'énergie électrique 3, le dispositif de gestion de transfert d'énergie électrique 5, un réseau de bord principal 4a d'un véhicule et éventuellement un réseau de bord secondaire 4b, et un deuxième stockeur d'énergie 6.

Le dispositif de gestion de transfert d'énergie électrique 5 comporte quatre bornes : d'une part, une première borne M, qui est une borne négative connectée à une masse du véhicule, et d'autre part, une deuxième borne P1, une troisième borne P2 et une quatrième borne P3 qui sont des bornes positives.

Le producteur d'énergie électrique 1 est relié électriquement d'un côté à la deuxième borne P1 du dispositif 5, avec un faisceau électrique (résistif et inductif), et de l'autre côté à la masse. L'alternateur 2 est aussi relié électriquement d'un côté à la deuxième borne P1 du dispositif 5, avec un faisceau électrique (résistif et inductif), et de l'autre côté à la masse. Le réseau de bord secondaire 4b est aussi relié électriquement d'un côté à la deuxième borne P1 du dispositif 5, avec un faisceau électrique (résistif et inductif), et de l'autre côté à la masse. Le premier stockeur d'énergie électrique 3 est aussi relié électriquement d'un côté à la deuxième borne P1 du dispositif 5 et de l'autre côté à la masse.

Le réseau de bord principal 4a est relié électriquement d'un côté à la troisième borne P2 du dispositif 5 avec au moins un faisceau et de l'autre côté à la masse.

Le deuxième stockeur 6 est relié électriquement d'un côté à la quatrième borne P3 du dispositif 5 et de l'autre côté à la masse avec des faisceaux.

L'alternateur 1 (ou alterno-démarreur) est utilisé pour la fourniture de puissance électrique au réseau de bord 4a, 4b du véhicule, pour les redémarrages du moteur thermique et pour les phases dite de BOOST. Lors d'une phase de BOOST, l'alternateur est utilisé pour une fournir du couple au moteur thermique en phase de roulage. En phase de BOOST, l'alternateur devient donc consommateur de courant.

Le démarreur 2 est utilisé pour les premiers démarrages du véhicule et éventuellement, selon la configuration du véhicule, pour les redémarrages du véhicule.

Le premier stockeur d'énergie électrique 3, par exemple de type batterie plomb 12V, est utilisé notamment pour le démarrage et le redémarrage, pour l'alimentation des consommateurs du réseau de bord principal 4a et secondaire 4b pendant les phases de veille du véhicule.

Le véhicule comporte aussi un capteur 8 collectant des données relatives au premier stockeur 3 : le courant du premier stockeur 3, la tension du premier stockeur 3, la température du premier stockeur 3, une estimation de l'état de charge du premier stockeur 3. De façon alternative, si le premier stockeur 3 est instrumenté (mesure de courant et de tension), il est possible d'exploiter ces informations.

Le réseau de bord principal 4a inclut des éléments électriques du véhicule tels que des calculateurs et des équipements électriques, par exemple, des équipements de confort, les organes sécuritaires ainsi que les autres équipements électriques n'entrant pas dans les catégories précédemment citées.

De façon optionnelle, le véhicule comporte un réseau de bord secondaire 4b comportant uniquement des consommateurs (ou organes) qui ne sont pas perturbés pendant les phases de démarrage, de redémarrage et de BOOST.

Le deuxième stockeur 6 (ou stockeur secondaire), par exemple une batterie lithium-ion, est utilisé pour alimenter le réseau de bord principal 4a pendant l'usage du véhicule (hors veille).

Le véhicule comporte aussi un superviseur 7 apte à collecter et transmettre des données du véhicule.

Le véhicule comporte aussi un capteur 8 collectant des données relatives au premier stockeur 3 : le courant du premier stockeur 3, la tension du premier stockeur 3, la température du deuxième stockeur 3, une estimation de l'état de charge du deuxième stockeur 3.

Le véhicule comporte aussi des éléments de distribution électrique 10, 11, 12. Ces éléments de distribution électrique 10, 11, 12 sont par exemple des faisceaux ayant des caractéristiques inductive et résistive. Les faisceaux contribue au bon fonctionnement du système grâce à leur caractéristique résistive et inductive.

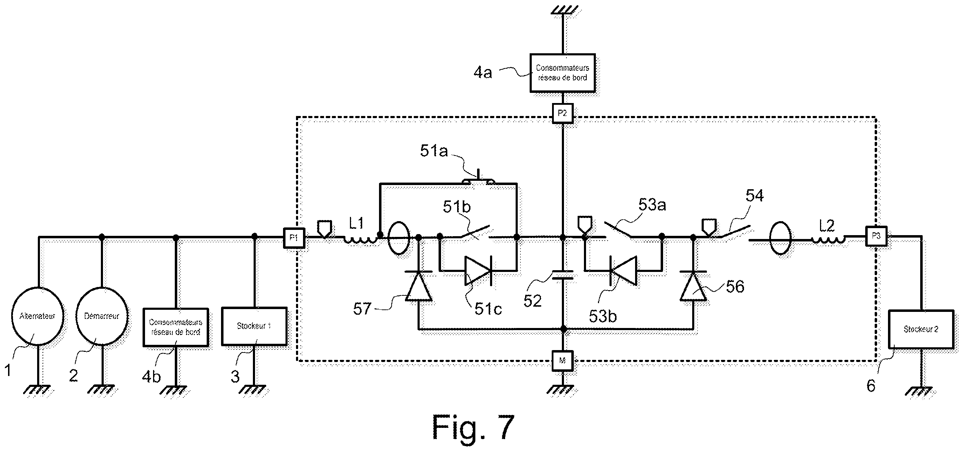

Selon une variante de réalisation de l'invention, le dispositif 5 comporte en outre des inductances (R,L) de l'ordre de quelques µH (par exemple inférieure à 10µH) dans le cas où l'effet inductif des faisceaux n'est pas suffisant lors du pilotage des interrupteurs en PWM. Une telle variante est présentée à la figure 7. L'architecture de la figure 7 est une version simplifiée de la l'architecture de la figure 1 (pour en faciliter la compréhension) et pour laquelle, ont été ajoutées deux inductances : une première inductance L1 et une deuxième inductance L2. Ces deux inductances sont ajoutées pour compenser un effet inductif insuffisant des faisceaux. Ce phénomène peut se produire notamment si les faisceaux sont relativement courts (quelques centimètres).

Comme expliqué précédemment, le dispositif 5 comporte quatre bornes :
- la première borne M, borne négative connectée à une masse du véhicule,
- la deuxième borne P1, borne positive connectée au premier stockeur 3, au démarreur 2 et à l'alternateur 1 et au réseau de bord secondaire 4b ;
- la troisième borne P2, borne positive connectée au réseau de bord principal 4a ;
- la quatrième borne P3, borne positive connectée au deuxième stockeur 6.

Le dispositif 5 comporte deux interrupteurs principaux 51,53, aussi appelé interrupteurs de puissance, (par exemple de type MOSFET, acronyme anglais de Metal Oxide Semiconductor Field Effect Transistor - qui se traduit par transistor à effet de champ à structure métal-oxyde-semiconducteur) :
Le premier interrupteur principal 51 est composé d'un premier interrupteur élémentaire 51a, d'un deuxième interrupteur élémentaire 51b et d'une première diode 51c.

Il peut y avoir plusieurs deuxièmes interrupteurs élémentaires 51b et diodes 51c montés en parallèles. Dans ce cas, les deuxièmes interrupteurs élémentaires 51b sont commandés simultanément.

La première diode 51c est mise en place pour la sûreté de fonctionnement. En effet la première diode 51c permet d'alimenter le réseau de bord principal 4a s'il y a une défaillance en circuit ouvert du deuxième interrupteur élémentaire 51b, 53, et/ou 54 A confirmer. En effet, si le système est dans une phase de décharge du second stockeur 6 dans le réseau de bord princpal 4a et que le deuxième interrupteur principal 53 et/ou l'interrupteur électromécanique 54 deviennent hors service ouvert, alors comme le premier interrupteur élémentaire 51a et le deuxième interrupteur 51b sont pilotés ouverts, le courant passera par la première diode 51c pour alimenter le réseau de bord principal 4a.

Le premier interrupteur élémentaire (par exemple un interrupteur de type électromécanique) 51a est normalement fermé. Il est utilisé pour alimenter le véhicule pendant une phase parking du véhicule (veille du véhicule).

Le deuxième interrupteur élémentaire 51b fonctionne :
- en ON (fermeture manuelle) : Dans ce mode de pilotage, il n'y a pas de limitation du courant quel que soit le sens du courant ;
- En OFF (ouverture manuelle) : pas de passage de courant dans le premier interrupteur principal 51 dans le sens du deuxième stockeur 6 vers le premier stockeur 3 lorsque le premier interrupteur élémentaire 51a ouvert. Par contre, si le deuxième interrupteur élémentaire 51b est de type MOSFET, il y a une possibilité du passage de courant dans le sens du premier stockeur 3 vers le deuxième stockeur 6, ce courant passerait par la diode du MOS (ou diode 51c) si U55_a > U_55b + Vd avec Vd tension de la diode l'état passant, U55_a la tension du premier stockeur 3 entre la deuxième borne P1 et la première borne M et U55b la tension du réseau de bord principal 4a entre la troisième borne P2 et la deuxième borne M.
- En PWM (commande piloté / mode automatique) dans le sens deuxième stockeur 6 vers premier stockeur 3 de façon à limiter la décharge du deuxième stockeur 6 vers le premier stockeur 3. Cette limitation est obtenue à partir d'une consigne de courant et/ou de tension à respecter Dans le mode PWM, il n'y a pas de limitation de courant dans le sens stockeur 3 vers l'ensemble stockeur 6 et réseau de bord 4a, nous sommes dans un fonctionnement similaire au mode ON puisque le courant est inférieur à la consigne de courant.

Le deuxième interrupteur élémentaire 51b est pilotable en tension et en courant dans le transfert d'énergie électrique (à partir de consigne de tension et de courant pour la construction du signal PWM). Tant que le courant, la tension et la puissance sont dans un gabarit défini par des valeurs de limitation, il n'y a pas d'écrêtage en tension, de limitation du courant ou de limitation de la puissance et le deuxième interrupteur élémentaire 51b se comporte comme un interrupteur fermé. Si le courant, la tension ou la puissance est au-delà du gabarit défini, il y a un écrêtage en tension, ou une limitation en courant ou une limitation de la puissance et le deuxième interrupteur élémentaire 51b se comporte comme un hâcheur monodirectionnel.

Le pilotage de 51b permet une mise en place d'une limitation de courant dans le sens du deuxième stockeur 6 vers l'ensemble comprenant le premier stockeur 3 et l'alterno-démarreur 1 sous contrainte de tension du réseau de bord principal 4a (de façon à maintenir un tension minimale dans le réseau de bord principal 4a). Cette limitation de courant est utilisée pour contribuer à la fonction BOOST et fournir du courant à l'alterno-démarreur 1 qui contribue alors à fournir de couple au moteur thermique en phase de roulage véhicule.

Le pilotage de 51b ne permet pas de limitation du courant dans le sens du premier stockeur 3 vers le deuxième stockeur 6 notamment à cause de la première diode.

Le deuxième interrupteur 51b peut être piloté :
de façon manuelle, à partir d'une consigne de courant de décharge (de 0 à Imax);
de façon automatique, sous autorisation : dès que la tension du premier stockeur 3 passe sous un seuil de tension prédéterminé, le superviseur autorise de la décharge du deuxième stockeur 6 vers l'ensemble comprenant le premier stockeur 3 et l'alterno-démarreur 1 sous la contrainte d'une consigne de courant maximal Imax de décharge et avec le respect d'une tension minimale du réseau de bord principal 4a.

Le deuxième interrupteur principal 53 comporte un troisième interrupteur 53a et une deuxième diode 53b.

Il peut y en avoir plusieurs interrupteurs principaux 53 en parallèle. Les troisièmes interrupteurs élémentaires 53a sont alors commandés simultanément.

Le troisième interrupteur 53a fonctionne :
- en ON (fermeture « manuelle ») : Dans ce sens, il n'y a pas de limitation du courant quel que soit le sens du courant ;
- en OFF (ouverture « manuelle ») : pas de passage de courant dans 53a dans le sens stockeur 3 vers stockeur 6. Par contre, si 53a est de type MOSFET, il y a une possibilité du passage de courant dans le sens stockeur 6 vers stockeur 3, ce courant passerait par la diode du MOS (ou diode 53b) si U55_c > U_55b + Vd avec Vd tension de la diode à l'état passant.
- en PWM (commande piloté / mode automatique) dans le sens de l'ensemble comprenant le premier stockeur 3 et le générateur 1 vers le deuxième stockeur 6, de façon à limiter la recharge du premier stockeur 6. Cette limitation est obtenue à partir d'une consigne de courant et/ou de tension à respecter Dans le mode PWM, il n'y a pas de limitation de courant dans le sens stockeur 6 vers l'ensemble stockeur 3/réseau de bord secondaire 4b et réseau de bord principal 4a, nous sommes dans un fonctionnement similaire au mode ON puisque le courant est inférieur à la consigne de courant.

Le troisième interrupteur 53a est pilotable en tension et en courant dans le transfert d'énergie électrique (à partir de consigne en tension et en courant pour la construction du PWM). Tant que le courant, la tension et la puissance sont dans un gabarit défini par des valeurs de limitation, il n'y a pas d'écrêtage en tension, de limitation du courant ou de limitation de la puissance et le troisième interrupteur 53a se comporte comme un interrupteur fermé. Si le courant, la tension ou la puissance est au-delà du gabarit défini, il y a un écrêtage en tension, ou une limitation en courant ou une limitation de la puissance et le troisième interrupteur 53a se comporte comme un hâcheur monodirectionnel.

Le pilotage du troisième interrupteur 53a permet la mise en place d'une limitation de courant dans le sens de l'ensemble comprenant le premier stockeur 3 le démarreur 1 et l'alternateur 2 vers le deuxième stockeur 6 sous contraintes :
D'une consigne en courant de recharge maximal du deuxième stockeur 6 ;
D'une tension réseau de bord principal 4a minimale à garantir ;
D'une tension maximale admissible du deuxième stockeur 6.

Le pilotage du troisième interrupteur 53a ne permet pas de limitation du courant dans le sens du deuxième stockeur 6 vers l'ensemble comprenant le premier stockeur 3 le démarreur 1 et l'alternateur 2.

La deuxième diode 53b est mise en place pour la sûreté de fonctionnement. La deuxième diode 53b permet d'alimenter le réseau de bord principal 4a s'il y a une défaillance en circuit ouvert de [51b], [53a] et [51c].

En résumé, le deuxième interrupteur élémentaire 51b et le troisième interrupteur élémentaire 53a se comporte chacun comme un hacheur monodirectionnel. En revanche, le dispositif 5, au global, se comporte comme un abaisseur bidirectionnel.

Le dispositif selon l'invention 5 comporte aussi un interrupteur électromécanique 54 normalement ouvert permettant une isolation du deuxième stockeur 6 par exemple en cas d'atteinte des conditions aux limites du deuxième stockeur 6 (durabilité du stockeur) Il est également ouvert lorsque le véhicule est en veille : la batterie lithium n'est pas utilisée pendant la veille du véhicule ou d'une défaillance de l'interrupteur principal 53 à l'état fermé (toujours passant).

L'invention comporte aussi une capacité de filtrage 52 relié d'une part à la troisième borne P2 et la première borne M. La capacité permet de filtrer la tension du réseau de bord principal 4a et ainsi de limiter les variations de tension induite par les pilotages en PWM des interrupteurs principaux 51,53. Sans cela, du fait des effets inductifs, la tension peut atteindre des niveaux très élevés (liés à U=L*dl/dt avec un dt très faible on obtient un U très élevé).

Les interrupteurs principaux 51 et 53 ont un positionnement non conventionnel dans une architecture électrique d'un véhicule. Les diodes sont à cathode commune avec tout ou partie du réseau de bord 4a électrique 12V connecté à ces cathodes. Autrement dit, le réseau de bord principal est connecté aux cathodes des diodes 51c, 53c.

Le positionnement des interrupteurs principaux 51, 53 et des diodes 51c, 53b permet de s'assurer que le réseau de bord principal 4a peut être alimenté quel que soit le mode de pilotage des interrupteurs élémentaires 51a, 51b, 53b grâce aux diodes 51c, 53c.

Le dispositif 5 permet, en pilotant les interrupteurs principaux 51, 53, d'alimenter les consommateurs du réseau de bord 4a et 4b avec différentes sources d'énergie :
- Soit à partir de l'alternateur 1 avec une consigne de tension pouvant varier de 13 à 16V;
- Soit à partir de l'ensemble premier stockeur 3, alternateur 1 par une gestion des interrupteurs principaux 51, 53.
- Soit à partir du deuxième stockeur 6 par une gestion des interrupteurs principaux 51, 53.

Le dispositif selon l'invention comporte aussi deux mesures de courant 50a, 50b :
- Une première mesure de courant 50a mesurant le courant passant par le deuxième interrupteur élémentaire 51b et la première diode 51c (le courant passant par le premier interrupteur élémentaire 51a n'est pas mesuré par la première de courant 50a) et qui est utilisée notamment pour la mesure de courant de recharge du premier stockeur 3 par le deuxième stockeur 6 ou pour l'aide au démarrage/ redémarrage par une fourniture de courant limité du deuxième stockeur 6 pour l'alternateur 1 ou le démarreur 2.
- Une deuxième mesure de courant 50b mesurant la recharge du deuxième stockeur 6.

L'invention comporte aussi trois mesures de tensions 55a, 55b, 55c.

La première mesure de tension 55a mesure la tension du premier stockeur 3 entre la deuxième borne P1 et la première borne M.

La deuxième mesure de tension 55b mesure la tension du réseau de bord principal 4a entre la troisième borne P2 et la deuxième borne M.

La troisième mesure de tension 55c mesure la différence de potentiel entre, d'une part, le premier interrupteur principal 53 et l'interrupteur électromécanique 54 (potentiel positif) et, d'autre part, la borne M (potentiel négatif).

Le dispositif selon l'invention 5 comporte aussi deux diodes de roue libre 56, 57.

La première diode de roue libre 56 est indispensable lors du fonctionnement en PWM, sinon la tension devient trop élevée sur le deuxième stockeur 6, en raison des effets inductifs.

La deuxième diode de roue libre 57 est indispensable lors du fonctionnement en PWM, sinon la tension devient trop élevée sur le premier stockeur 3 (hors démarrage, redémarrage). Sans diode, les surtensions peuvent détruire les interrupteurs
Si les interrupteurs élémentaires 51b, 53a ne sont pas pilotés en PWM, les diodes de roue libres 56, 57 ne sont pas obligatoires. En effet l'architecture selon l'invention permet de travailler en PWM (avec diodes) ou sans PWM (sans diode).

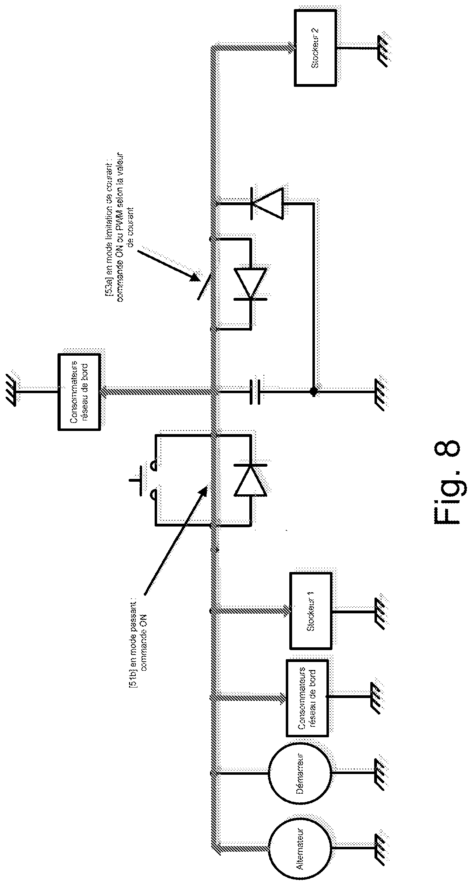

En particulier, si le deuxième interrupteur élémentaire 51b est piloté en ouvert / fermé (ON/OFF) et le troisième interrupteur élémentaire 53a est piloté en PWM la deuxième diode de roue libre 57 n'est obligatoire. La figure 8 montre un mode de réalisation simplifié de l'invention qui diffère de celui de la figure 1 en ce qu'il comprend uniquement la première diode de roue libre 56 et ne comporte pas de deuxième diode de roue libre 57.

Le dispositif selon l'invention 5 comporte aussi un superviseur 58. Le superviseur 58 est configuré pour générer un signal de pilotage C1, C2, correspondant au mode de fonctionnement déterminé, pour le deuxième interrupteur élémentaire 51b et le troisième interrupteur élémentaire 53a. Ces signaux de pilotage permettent d'ouvrir et de fermer les interrupteurs 51b, 53a afin de réguler les valeurs de la tension et du courant associées au transfert d'énergie lorsqu'une limitation du courant et/ou de la tension est nécessaire.

La variante de réalisation de la figure 7 reprend les différents éléments du système de la figure 1. Cette variante se distingue en ce qu'elle comprend en outre :
- une première inductance L1 positionnée entre, d'une part, la deuxième borne P1 et, d'autre part, l'ensemble comprenant l'anode de la première diode 51c et la cathode de la deuxième diode de roue libre 57, et
- une deuxième inductance L2 positionnée entre d'une part, la quatrième borne P3 et, d'autre part, l'ensemble comprenant l'anode de la deuxième diode 53b et la cathode de la première diode de roue libre 56.

Les différents éléments de l'architecture de la figure 1 communiquent de la façon suivante.

L'alternateur 1 communique **[a]** avec le superviseur véhicule 7. L'alternateur 1 envoie au superviseur véhicule 7 des données alternateur avec par exemple la charge de l'alternateur. Le superviseur véhicule 7 envoie vers l'alternateur 1 des consignes de pilotage de l'alternateur.

Le réseau de bord principal 4a envoie **[b]** au superviseur véhicule 7 des informations concernant l'état des consommateurs électriques présents sur le réseau de bord principal 4a. Plus précisément, ce sont certains constituants (des consommateurs) du réseau de bord principal 4a qui envoient des informations au superviseur 7. Cette information permet au superviseur véhicule 7 de déterminer une plage de fonctionnement nominale en tension du réseau de bord principal 4a en définissant une tension minimale (Umin) et une tension maximale (Umax) à garantir.

Le réseau de bord secondaire 4b envoie **[c]** au superviseur véhicule 7 des informations concernant l'état des consommateurs électriques présents sur le réseau de bord secondaire 4b. Plus précisément, ce sont certains constituants (des consommateurs) du réseau de bord secondaire 4b qui envoient des informations au superviseur 7. Cette information permet au superviseur véhicule 7 de déterminer une plage de fonctionnement nominale en tension du réseau de bord secondaire 4b en définissant une tension minimale (Umin) et une tension maximale (Umax) à garantir.

Le premier stockeur communique **[d]** au superviseur véhicule 7 des informations concernant le premier stockeur 3, a minima : la température du premier stockeur, le courant du premier stockeur, la tension du premier stockeur, estimation de l'état de charge du premier stockeur.

Le superviseur du dispositif 5 reçoit **[e]** la première mesure de tension 55a entre P1 et M. Cette mesure représente la tension du premier stockeur 3 (c'est une image à la chute de tension prêt).

Le superviseur 58 du dispositif 5 reçoit **[f]** la première mesure de courant 50a dans le sens réseau de bord principale 4a vers premier stockeur 3 sur la deuxième borne P1 du dispositif 5.

Le superviseur 58 du dispositif 5 pilote **[g]** le premier interrupteur élémentaire 51a.

Le superviseur 58 du dispositif 5 pilote aussi **[h]** le deuxième interrupteur élémentaire 51b. Il s'agit d'un pilotage de type ON (autrement dit, en mode passant bidirectionnel), OFF (autrement dit, bloqué dans le sens réseau de bord secondaire 4b vers réseau de bord principal 4a et peut être passant dans le sens du premier stockeur 3 vers réseau de bord principal 4a à travers la première diode 51c ou en commutation (PWM) en mode limitation de courant dans le sens du deuxième stockeur 6 vers le premier stockeur 3 et passant dans le sens stockeur 3 vers réseau de bord 4a.

Le superviseur 58 du dispositif 5 reçoit **[i]** la deuxième mesure de tension entre P2 et M. Cette mesure représente la tension du réseau de bord principal 4a.

Le superviseur 58 du dispositif 5 pilote [j] le troisième interrupteur élémentaire 53a. Il s'agit d'un pilotage de type ON (autrement dit, passant quel que soit le sens du courant et la valeur du courant), OFF ou en commutation (PWM) en mode limitation de courant de recharge du deuxième stockeur 6 dans le sens alternateur 1 vers deuxième stockeur 6.

Le superviseur 58 du dispositif 5 pilote aussi [k] l'interrupteur électromécanique 54.

Le superviseur 58 du dispositif 5 reçoit [l] la deuxième mesure de courant 50b du deuxième stockeur 6.

Le superviseur 58 du dispositif 5 reçoit [m] la troisième mesure de tension 55c Cette mesure représente la tension du deuxième stockeur 6.

Le superviseur véhicule 7 et le superviseur 58 du dispositif 5 échangent **[n]** des informations.

Le superviseur véhicule 7 demande au superviseur 58 du dispositif 5 une contribution au mode BOOST.

Le superviseur véhicule 7 envoie au superviseur 58 du dispositif 5 :
- une consigne de courant maximal de recharge du deuxième stockeur 6 et une tension maximale du deuxième stockeur 6 (qui peut évoluer en fonction, par exemple, de la température du stockeur) pour le pilotage du troisième interrupteur élémentaire 53a en PWM ;
- une consigne de courant maximal de décharge du deuxième stockeur 6 vers l'alternateur 1, le démarreur 2 et le premier stockeur 3 (et réseau de bord secondaire 4b lorsqu'il est présent), pour le pilotage du deuxième interrupteur élémentaire 51b en PWM.
- une consigne ON/OFF pour le pilotage du premier interrupteur élémentaire 51a ;
- une consigne ON/OFF pour le pilotage de l'interrupteur électromécanique 54.

Le superviseur du dispositif 58 envoie au superviseur véhicule 7 des informations de diagnostic du système : par exemple des états des interrupteurs. Cela permet de définir le mode de pilotage adapté. S'il y a un interrupteur hors service : on passe à un mode dégradé.

Le deuxième stockeur communique **[o]** au superviseur véhicule 7 des informations concernant le deuxième stockeur 6, par exemple : la température du deuxième stockeur, le courant du deuxième stockeur, la tension du deuxième stockeur, estimation de l'état de charge du deuxième stockeur.

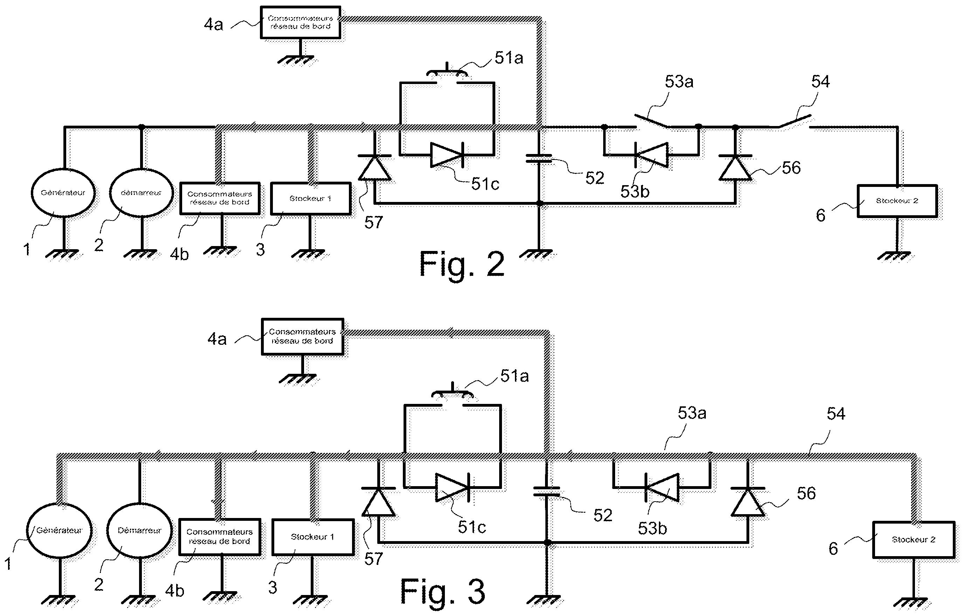

La figure 2 montre un premier mode de fonctionnement du système selon l'invention. Dans ce mode de fonctionnement, le premier interrupteur élémentaire 51a est ouvert, le deuxième interrupteur élémentaire 51b est fermé, le troisième interrupteur élémentaire 53a est ouvert, l'interrupteur électromécanique 54 est ouvert.

Ce mode de fonctionnement permet d'alimenter les réseaux de bord principal 4a et secondaire 4b à partir du premier stockeur 3.

La figure 3 montre un deuxième mode de fonctionnement du système selon l'invention. Dans ce mode de fonctionnement, le premier interrupteur élémentaire 51a est ouvert, le deuxième interrupteur élémentaire 51b est piloté en PWM, le troisième interrupteur élémentaire 53a est fermé, l'interrupteur électromécanique 54 est fermé.

Ce mode de fonctionnement permet de contribuer à la fonction BOOST en exploitant les deux stockeurs 3, 6 avec une limitation du courant fourni par le deuxième stockeur 6 à l'alterno-démarreur 1 de façon à maintenir une tension minimale pour le réseau de bord principal 4a. Cette limitation de courant est obtenue par le pilotage du deuxième interrupteur élémentaire 51b piloté en PWM par le superviseur 58 du dispositif 5, à partir d'une consigne de courant maximal.

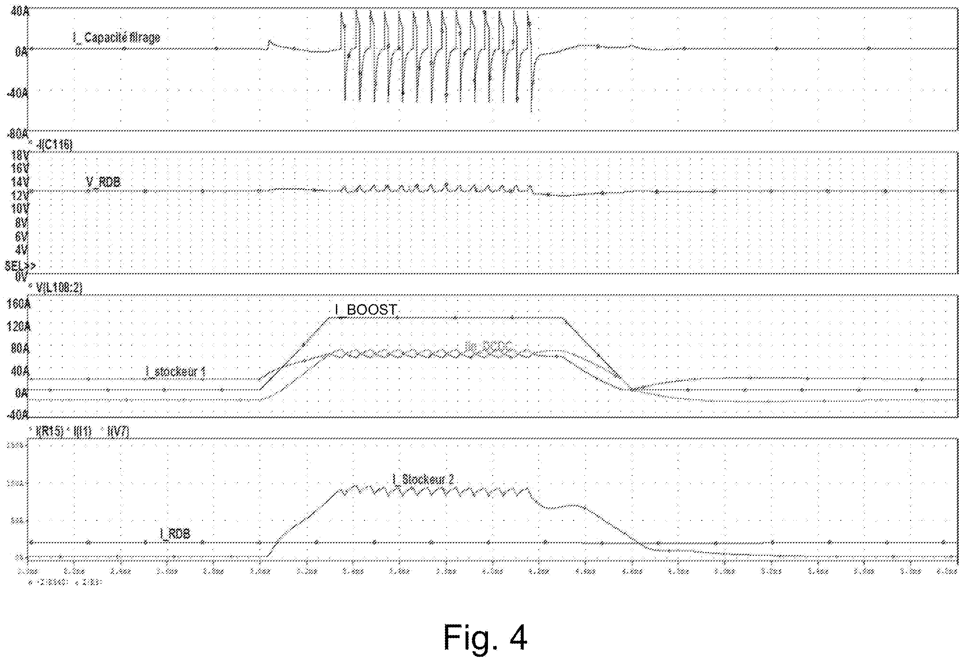

La figure 4 représente quatre diagrammes présentant l'évolution de différentes mesures d'intensité et de tension au cours du temps. Les courbes sont réparties sur quatre diagrammes pour faciliter la lecture. Une première courbe (I_BOOST) représente l'évolution du courant en entrée de l'alternateur 1. Une deuxième courbe (I_stockeur 1) représente l'évolution du courant en sortie du premier stockeur 3. Une troisième courbe (lin_DCDC) représente l'évolution du courant au niveau de la deuxième borne P1. Une quatrième courbe (I_RDB) représente l'évolution du courant en entrée du réseau de bord, autrement dit au niveau de la troisième borne P2. Une cinquième courbe (I_stockeur2) représente l'évolution du courant en sortie du deuxième stockeur 6, autrement dit au niveau de la quatrième borne P3. Une sixième courbe (V_RDB) représentation l'évolution de la tension au niveau du réseau de bord 4a. Une septième courbe représente l'évolution de l'intensité au niveau de la capacité 52.

Lors d'une première phase, correspondant à une phase nominale, le réseau de bord principal 4a est alimenté exclusivement par le premier stockeur 3. Le courant en sortie du deuxième stockeur 6 est sensiblement nul. Le courant au niveau de la deuxième borne P1 (lin_DCDC) est de l'ordre de - 20A). Le courant en sortie du premier stockeur 3 est sensiblement égal au courant en entrée du réseau de bord principal 4a, de l'ordre de 20A. La tension au niveau du réseau de bord est de l'ordre de 12v. L'intensité au niveau de la capacité 52 est nulle.

Lors d'une deuxième phase, correspondant à l'activation du mode BOOST, l'intensité au niveau de l'alterno-démarreur augmente progressivement jusqu'à 140A. L'intensité en sortie du deuxième stockeur 6 augmente jusqu'au environ de 100A. L'intensité au niveau de la deuxième borne P1 est de l'ordre de 80A. L'intensité en sortie du premier stockeur 3 est de l'ordre de 60A. A chaque instant, on a I_BOOST = I_stockeur1 + lin_DCDC et I_stockeur2 = lin_DCDC+ I_RDB.

Le courant en entrée du réseau de bord principal 4a est toujours de l'ordre de 20A. Les effets inductifs, engendrés par pilotage en PWM de l'interrupteur, provoquent des variations de tensions au niveau du réseau de bord (de l'ordre de +/- 1V). Ces variations sont relativement grâce à la capacité 52 qui joue un rôle de filtre et dont l'intensité varie entre 40a et -40a

Lors d'une troisième phase, correspondant à la désactivation du mode BOOST, le courant en sortie du deuxième stockeur 6 redevient sensiblement nul. Le courant au niveau de la deuxième borne P1 redevient aussi sensiblement redevient de l'ordre de -20A. Le courant en sortie du premier stockeur 3 redevient progressivement sensiblement égal au courant en entrée du réseau de bord principal 4a, de l'ordre de 20A. La tension au niveau du réseau de bord est de l'ordre de 12v. L'intensité au niveau de la capacité 52 redevient nulle.

On peut constater que le courant en entrée du réseau de bord principal 4a est toujours (avant, pendant et après l'activation du BOOST) de l'ordre de 20A. C'est l'effet recherché : le fonctionnement du réseau de bord n'est pas affecté par l'activation du BOOST.

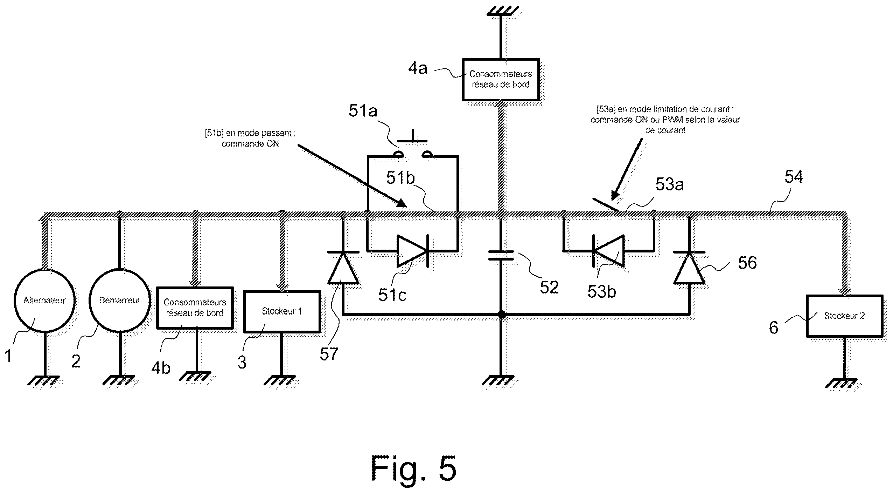

La figure 5 montre un troisième mode de fonctionnement du système selon l'invention. Il s'agit d'une recharge du deuxième stockeur 6 avec l'application d'une consigne de courant en pente pour limiter les perturbations. Dans ce mode de fonctionnement, le premier interrupteur élémentaire 51a est ouvert, le deuxième interrupteur élémentaire 51b est piloté en OFF ou en PWM. , le troisième interrupteur élémentaire 53a est piloté en PWM. L'interrupteur électromécanique 54 est fermé. Dans ce mode de fonctionnement, l'ensemble comprenant le premier stockeur 3 et l'alternateur 1 alimente le réseau de bord principal 4a et recharge le deuxième stockeur 6.

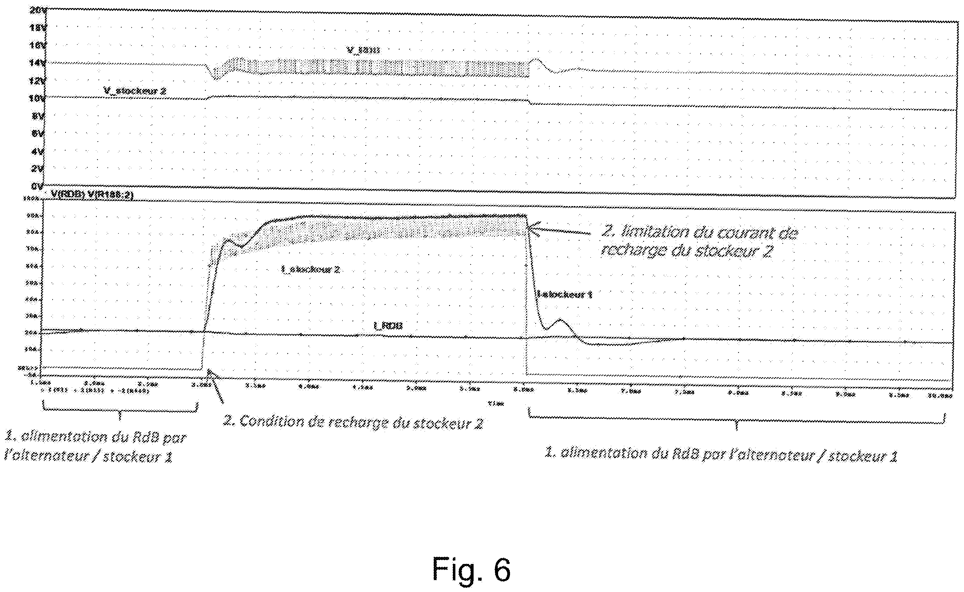

La figure 6 représente deux diagrammes, un premier diagramme présentant l'évolution de différentes mesures de tension au cours du temps et un second diagramme présentant l'évolution de différentes mesures d'intensité au cours du temps.

Sur le premier diagramme, une première courbe (V_RDB) représente l'évolution du la tension au niveau du réseau de bord principal 4a. Une deuxième courbe (V_stockeur 2) représente l'évolution de la tension au niveau du deuxième stockeur 6.

Sur le deuxième diagramme, une troisième courbe (I_Stockeur1) représente l'évolution du courant qui traverse P1. Une quatrième courbe (I_RDB) représente l'évolution du courant en entrée du réseau de bord principal 4a. Une cinquième courbe (I_stockeur2) représente l'évolution du courant en sortie du deuxième stockeur 6.

Lors d'une première phase, correspondant à une phase nominale, le réseau de bord principal 4a est alimenté exclusivement par le premier stockeur 3. Le courant en sortie du deuxième stockeur 6 est sensiblement nul. Le courant en sortie du premier stockeur 3 est sensiblement égal au courant en entrée du réseau de bord principal 4a, de l'ordre de 20A. La tension au niveau du deuxième stockeur 6 est de 10V. La tension au niveau du réseau de bord est de 14V.

Lors d'une deuxième phase, correspondant à l'activation de la recharge du deuxième stockeur 6, l'intensité au niveau du premier stockeur augmente progressivement jusqu'à 90A. L'intensité au niveau du deuxième stockeur 6 augmente jusqu'à environ de 90A. L'intensité au niveau du réseau de bord principal 4a reste constante aux alentours de 20A.

La tension au niveau du deuxième stockeur 6 reste autour de 10V (le courant de recharge du deuxième stockeur 6 a atteint la consigne de limitation de courant donc on entre en limitation de courant, c'est pour cela que l'on est autour de 10V). La tension au niveau du réseau de bord reste autour 14V en « oscillant » de plus ou moins 1V (sans la capacité de filtrage 52, on aurait plus d'oscillation. C'est grâce à la capacité 52 que l'ondulation est maitrisée). C'est l'effet du troisième interrupteur 53b piloté en PWM qui limite le courant de recharge du deuxième stockeur 6.

Lors d'une troisième phase, correspondant à la désactivation de la recharge du deuxième stockeur 6, le courant au niveau du deuxième stockeur 6 redevient sensiblement nul. Le courant en sortie du premier stockeur 3 redevient progressivement sensiblement égal au courant en entrée du réseau de bord principal 4a, de l'ordre de 20A.

On peut constater que le courant en entrée du réseau de bord principal 4a est toujours (avant, pendant et après l'activation de la recharge) de l'ordre de 20A. C'est l'effet recherché : le fonctionnement du réseau de bord n'est pas affecté par l'activation la recharge du deuxième stockeur 6.

La tension au niveau du deuxième stockeur 6 est de 10V, ce qui correspond à un stockeur très déchargé. La tension au niveau du réseau de bord est de 14V.

## Revendications

1. Dispositif (5) de gestion de transfert d'énergie comportant une première borne (M) destinée à être reliée à une masse électrique, une deuxième borne (P1) destinée à être reliée à un premier stockeur (3) d'énergie électrique, une troisième borne (P2) destinée à être reliée à au moins un consommateur électrique, une quatrième borne (P3) destinée à être reliée à un deuxième stockeur (6) d'énergie électrique, ledit dispositif (5) comprenant un premier interrupteur principal (51) relié d'une part à la deuxième borne (P1) et d'autre part à la troisième borne (P2), un deuxième interrupteur principal (53) relié d'une part à la quatrième borne (P3) et d'autre part à la troisième borne (P2), le premier interrupteur principal (51) comportant une première diode (51c) dont la cathode est reliée à la troisième borne (P2), le deuxième interrupteur principal (53) comportant une deuxième diode (53b) dont la cathode est reliée à la troisième borne (P2), le deuxième interrupteur principal (53) comportant, en outre, un troisième interrupteur élémentaire (53a), monté en parallèle de la deuxième diode (53b), **caractérisé en ce qu'**il comprend en outre :
- un superviseur (58) apte à délivrer un signal modulé au troisième interrupteur élémentaire (53a) de façon à limiter le courant transitant par ledit troisième interrupteur élémentaire (53a), ledit troisième interrupteur élémentaire (53a) étant adapté pour être piloté par un signal en modulation de largeur d'impulsions.
- une première diode de roue libre (56) dont l'anode est reliée à la première borne (M) et la cathode à l'anode de la deuxième diode (53b),
- une capacité (52) reliée d'une part à la troisième borne (P2) et d'autre part à la première borne (M).

2. Dispositif (5) de gestion de transfert d'énergie selon la revendication 1, **caractérisé en ce que** le premier interrupteur principal (51) comprend en outre un premier interrupteur élémentaire (51a) positionné entre la deuxième borne (P1) et la troisième borne (P2).

3. Dispositif (5) de gestion de transfert d'énergie selon l'une des revendications 1 ou 2, **caractérisé en ce que** le premier interrupteur principal (51) comporte, en outre, un deuxième interrupteur élémentaire (51b), monté en parallèle de la première diode (51c).

4. Dispositif (5) de gestion de transfert d'énergie selon la revendication 3, **caractérisé en ce que** le superviseur (58) est, en outre, apte à délivrer :
- un signal modulé au deuxième interrupteur élémentaire (51b) de façon à limiter le courant transitant par ledit deuxième interrupteur élémentaire (51b), ledit deuxième interrupteur élémentaire (51b) étant adapté pour être piloté par un signal en modulation de largeur d'impulsions.

5. Dispositif (5) de gestion de transfert d'énergie selon la revendication 4, **caractérisé en ce qu'**il comporte en outre :
- une deuxième diode de roue libre (57) dont l'anode est reliée à la première borne (M) et la cathode à l'anode de la première diode (51c).

6. Dispositif (5) de gestion de transfert d'énergie selon la revendication 5, **caractérisé en ce qu'**il comprend, en outre, un interrupteur électromécanique (54) positionné entre d'une part, la quatrième borne (P3) et d'autre part, un ensemble comprenant l'anode de la deuxième diode (53b) et la cathode de la première diode de roue libre (56).

7. Dispositif (5) de gestion de transfert d'énergie selon la revendication précédente, **caractérisé en ce qu'**il comprend, en outre :
- une première inductance (L1) positionnée entre, d'une part, la deuxième borne (P1) et, d'autre part, l'ensemble comprenant l'anode de la première diode (51c) et la cathode de la deuxième diode de roue libre (57), et
- une deuxième inductance (L2) positionnée entre d'une part, la quatrième borne (P3) et, d'autre part, l'ensemble comprenant l'anode de la deuxième diode (53b) et la cathode de la première diode de roue libre (56).

8. Système électrique d'un véhicule comportant un producteur d'énergie (1) un premier stockeur d'énergie (3), un deuxième stockeur d'énergie (6) et un réseau de bord principal (4a) comportant au moins un consommateur électrique **caractérisé en ce qu'**il comporte en outre un dispositif (5) de gestion de transfert d'énergie selon l'une des revendications précédentes, la deuxième borne (P1) étant reliée au premier stockeur (3), la troisième borne (P2) étant reliée au réseau de bord (4a), la quatrième borne (P3) étant reliée au deuxième stockeur (6), la première borne (M) étant relié à une masse électrique du véhicule, le producteur d'énergie (1) étant relié à la deuxième borne (P1) ou à la troisième borne (P2).

9. Véhicule comportant un dispositif (5) de gestion de transfert d'énergie selon l'une des revendications 1 à 7 ou un système électrique selon la revendication 8.

## Patentansprüche

1. Vorrichtung (5) zur Leistungsübertragungsverwaltung, die eine erste Klemme (M) umfasst, die dazu bestimmt ist, mit einer elektrischen Masse verbunden zu sein, eine zweite Klemme (P1), die dazu bestimmt ist, mit einem ersten Speicher (3) elektrischer Energie verbunden zu sein, eine dritte Klemme (P2), die dazu bestimmt ist, mit mindestens einem Stromverbraucher verbunden zu sein, eine vierte Klemme (P3), die dazu bestimmt ist, mit einem zweiten Speicher (6) elektrischer Energie verbunden zu sein, wobei die Vorrichtung (5) einen ersten Hauptschalter (51) umfasst, der einerseits mit der zweiten Klemme (P1) und andererseits mit der dritten Klemme (P2) verbunden ist, einen zweiten Hauptschalter (53), der einerseits mit der vierten Klemme (P3) und andererseits mit der dritten Klemme (P2) verbunden ist, wobei der erste Hauptschalter (51) eine erste Diode (51c) umfasst, deren Kathode mit der dritten Klemme (P2) verbunden ist, wobei der zweite Hauptschalter (53) eine zweite Diode (53b) umfasst, deren Kathode mit der dritten Klemme (P2) verbunden ist, wobei der zweite Hauptschalter (53) außerdem einen dritten elementaren Schalter (53a) umfasst, der mit der zweiten Diode (53b) parallel geschaltet ist, **dadurch gekennzeichnet, dass** sie außerdem Folgendes umfasst:
- einen Supervisor (58) der geeignet ist, ein moduliertes Signal zu dem dritten elementaren Schalter (53a) derart zu liefern, dass der Strom, der durch den dritten elementaren Schalter (53a) durchgeht, begrenzt wird, wobei der dritte elementare Schalter (53a) angepasst ist, um von einem Signal in Impulsbreitenmodulation gesteuert zu werden.
- eine erste Freilaufdiode (56), deren Anode mit der ersten Klemme (M) verbunden ist, und die Kathode mit der Anode der zweiten Diode (53b) verbunden ist,
- eine Kapazität (52), die einerseits mit der dritten Klemme (P2) und andererseits mit der ersten Klemme (M) verbunden ist.

2. Vorrichtung (5) zur Leistungsübertragungsverwaltung nach Anspruch 1, **dadurch gekennzeichnet, dass** der erste Hauptschalter (51) außerdem einen ersten elementaren Schalter (51a) umfasst, der zwischen der zweiten Klemme (P1) und der dritten Klemme (P2) positioniert ist.

3. Vorrichtung (5) zur Leistungsübertragungsverwaltung nach einem der Ansprüche 1 oder 2, **dadurch gekennzeichnet, dass** der erste Hauptschalter (51) außerdem einen zweiten elementaren Schalter (51b) umfasst, der mit der ersten Diode (51c) parallel geschaltet ist.

4. Vorrichtung (5) zur Leistungsübertragungsverwaltung nach Anspruch 3, **dadurch gekennzeichnet, dass** der Supervisor (58) außerdem geeignet ist, Folgendes zu liefern:
- ein moduliertes Signal zu dem zweiten elementaren Schalter (51b) derart, dass der Strom, der durch den zweiten elementaren Schalter (51b) durchgeht, begrenzt wird, wobei der zweite elementare Schalter (51b) angepasst ist, um von einem Signal in Impulsbreitenmodulation gesteuert zu sein.

5. Vorrichtung zur Leistungsübertragungsverwaltung nach Anspruch 4, **dadurch gekennzeichnet, dass** sie außerdem Folgendes umfasst:
- eine zweite Freilaufdiode (57), deren Anode mit der ersten Klemme (M) verbunden ist, und die Kathode mit der Anode der zweiten Klemme (51c).

6. Vorrichtung (5) zur Leistungsübertragungsverwaltung nach Anspruch 5, **dadurch gekennzeichnet, dass** sie außerdem einen elektromechanischen Schalter (54) umfasst, der einerseits zwischen der vierten Klemme (P3) und andererseits einer Anordnung, die die Anode der zweiten Diode (53b) umfasst, und der Kathode der ersten Freilaufdiode (56) positioniert ist.

7. Vorrichtung (5) zur Leistungsübertragungsverwaltung nach dem vorstehenden Anspruch, **dadurch gekennzeichnet, dass** sie außerdem Folgendes umfasst:
- eine erste Induktanz (L1), die einerseits zwischen der zweiten Klemme (P1) und andererseits der Anordnung, die die Anode der ersten Diode (51c) umfasst, und der Kathode der zweiten Freilaufdiode (57) positioniert ist, und
- eine zweite Induktanz (L2), die einerseits zwischen der vierten Klemme (P3) und andererseits der Anordnung, die die Anode der zweiten Diode (53b) umfasst, und der Kathode der ersten Freilaufdiode (56) positioniert ist.

8. Elektrisches System eines Fahrzeugs, das einen Energieerzeuger (1), einen ersten Energiespeicher (3), einen zweiten Energiespeicher (6) und ein Hauptbordnetz (4a) umfasst, das mindestens einen Stromverbraucher umfasst, **dadurch gekennzeichnet, dass** es außerdem eine Vorrichtung (5) zur Leistungsübertragungsverwaltung nach einem der vorstehenden Ansprüche umfasst, wobei die zweite Klemme (P1) mit dem ersten Speicher (3) verbunden ist, die dritte Klemme (P2) mit dem Bordnetz (4a) verbunden ist, die vierte Klemme (P3) mit dem zweiten Speicher (6) verbunden ist, wobei die erste Klemme (M) mit einer elektrischen Masse des Fahrzeugs verbunden ist, wobei der Energieerzeuger (1) mit der zweiten Klemme (P1) oder mit der dritten Klemme (P2) verbunden ist.

9. Fahrzeug, das eine Vorrichtung (5) zur Leistungsübertragungsverwaltung nach einem der Ansprüche 1 bis 7 oder ein elektrisches System nach Anspruch 8 umfasst.

## Claims

1. A power transfer management device (5) comprising a first terminal (M) intended to be connected to an electrical ground, a second terminal (P1) intended to be connected to a first electrical energy storage device (3), a third terminal (P2) intended to be connected to at least one electrical consumer, a fourth terminal (P3) intended to be connected to a second electrical energy storage device (6), said device (5) including a first main switch (51) connected on the one hand to the second terminal (P1) and on the other hand to the third terminal (P2), a second main switch (53) connected on the one hand to the fourth terminal (P3) and on the other hand to the third terminal (P2), the first main switch (51) comprising a first diode (51c), the cathode of which is connected to the third terminal (P2), the second main switch (53) comprising a second diode (53b), the cathode of which is connected to the third terminal (P2), the second main switch (53) comprising, in addition, a third basic switch (53a), mounted in parallel with the second diode (53b), **characterized in that** it further includes:
- a supervisor (58) able to deliver a modulated signal to the third basic switch (53a) so as to limit the current passing through said third basic switch (53a), said third basic switch (53a) being suitable to be controlled by a pulse width modulation signal,
- a first freewheeling diode (56), the anode of which is connected to the first terminal (M) and the cathode to the anode of the second diode (53b),
- a capacitor (52) connected on the one hand to the third terminal (P2) and on the other hand to the first terminal (M).

2. The power transfer management device (5) according to Claim 1, **characterized in that** the first main switch (51) further includes a first basic switch (51a) positioned between the second terminal (P1) and the third terminal (P2).

3. The power transfer management device (5) according to one of Claims 1 or 2, **characterized in that** the first main switch (51) comprises, in addition, a second basic switch (51b), mounted in parallel to the first diode (51c).

4. The power transfer management device (5) according to Claim 3, **characterized in that** the supervisor (58) is, in addition, able to deliver:
- a modulated signal to the second basic switch (51b) so as to limit the current passing through said second basic switch (51b), said second basic switch (51b) being suitable to be controlled by a pulse width modulation signal.

5. The power transfer management device (5) according to Claim 4, **characterized in that** it further comprises:
- a second freewheeling diode (57), the anode of which is connected to the first terminal (M) and the cathode to the anode of the first diode (51c).

6. The power transfer management device (5) according to Claim 5, **characterized in that** it further includes an electromechanical switch (54) positioned between, on the one hand, the fourth terminal (P3) and on the other hand an assembly including the anode of the second diode (53b) and the cathode of the first freewheeling diode (56).

7. The power transfer management device (5) according to the preceding claim, **characterized in that** it further comprises:
- a first inductor (L1) positioned between, on the one hand, the second terminal (P1) and, on the other hand, the assembly including the anode of the first diode (51c) and the cathode of the second freewheeling diode (57), and
- a second inductor (L2) positioned between, on the one hand, the fourth terminal (P3) and, on the other hand, the assembly including the anode of the second diode (53b) and the cathode of the first freewheeling diode (56).

8. An electrical system of a vehicle comprising an energy producer (1), a first energy storage device (3), a second energy storage device (6) and a main on-board network (4a) comprising at least one electrical consumer, **characterized in that** it further comprises a power transfer management device (5) according to one of the preceding claims, the second terminal (P1) being connected to the first energy storage device (3), the third terminal (P2) being connected to the on-board network (4a), the fourth terminal (P3) being connected to the second energy storage device (6), the first terminal (M) being connected to an electrical ground of the vehicle, the energy producer (1) being connected to the second terminal (P1) or to the third terminal (P2).

9. A vehicle comprising a power transfer management device (5) according to one of Claims 1 to 7 or an electrical system according to Claim 8.
